# EUROPÄISCHE PATENTSCHRIFT

(11) **EP 4 179 598 B1**
(45) Veröffentlichungstag und Bekanntmachung des Hinweises auf die Patenterteilung: **03.04.2024**
(21) Anmeldenummer: 21740474.8
(22) Anmeldetag: 02.07.2021
(51) Int. Cl.: H01R 13/631

(54) **SELBSTAUSRICHTENDES ELEKTRISCHES VERBINDERSYSTEM**
SELF-ALIGNING ELECTRICAL CONNECTOR SYSTEM
ENSEMBLE CONNECTEUR ÉLECTRIQUE À ALIGNEMENT AUTOMATIQUE

(30) Priorität: 11.07.2020 DE 102020004182
(43) Veröffentlichungstag der Anmeldung: 17.05.2023
(73) Patentinhaber: Kostal Kontakt Systeme GmbH, 58513 Lüdenscheid (DE)
(72) Erfinder: WOLTER, Martin, 44287 Dortmund (DE); EBERHARDT, Guido, 58099 Hagen (DE); ROLF, Erik, 42929 Wermelskirchen (DE); AMELUNG, Stefan, 44139 Dortmund (DE); SPECHT, Benedikt, 59846 Sundern (DE)
(74) Vertreter: Kerkmann, Detlef
(86) Internationale Anmeldenummer: PCT/EP2021/068375
(87) Internationale Veröffentlichungsnummer: WO 2022/012977

(56) Entgegenhaltungen:
- EP-A1- 1 701 413
- EP-A1- 2 816 674
- CN-A- 106 099 537

## Beschreibung

Die Erfindung betrifft ein selbstausrichtendes elektrisches Verbindersystem zur Daten- und/oder Energieübertragung, mit einem ersten Verbinderteil, welches mehrere Kleinlastkontaktelemente und/oder Hochlastkontaktelemente aufweist, mit einem an das erste Verbinderteil anfügbaren zweiten Verbinderteil, welches zu den Kleinlastkontaktelementen und/oder Hochlastkontaktelementen des ersten Verbinderteils komplementäre Kleinlastkontaktelemente und/oder Hochlastkontaktelemente aufweist, wobei das erste Verbinderteil mehrere Positionierstifte aufweist, die dazu ausgelegt sind, in Positionierkammern des zweiten Verbinderteils einzugreifen, um eine Grobpositionierung der beiden Verbinderteile relativ zueinander zu erreichen, und mit einem ebenen Trägerrahmen, an dem das erste Verbinderteil mit drei rotatorischen und mindestens zwei translatorischen Freiheitsgraden schwimmend angeordnet ist.

Ein solches Verbindersystem eignet sich beispielsweise zur Herstellung elektrischer Verbindungen zu einer Fahrzeugbatterie eines elektrisch angetriebenen Kraftfahrzeugs. Hierbei werden über recht querschnittsstarke Hochlastkontaktelemente relativ hohe Ströme bei zugleich relativ hohen Spannungen geführt. Daneben werden zumeist mehrere elektrische Verbindungen für Daten und Steuersignale benötigt, die über eine Vielzahl von wesentlich querschnittsschwächeren Kleinlastkontaktelemente geführt werden können.

Hierzu wird ein elektrisches Verbindersystem vorgesehen, das erste und zweite Verbinderteile aufweist, die als komplex ausgeführte Steckverbinder miteinander verbunden werden können. An den ersten und zweiten Verbinderteilen sind jeweils zueinander komplementäre Hochlast- und Kleinlastkontaktelemente angeordnet, die durch das Zusammenfügen der Verbinderteile miteinander in Kontakt gebracht werden.

Das Zusammenfügen von vielpoligen, komplex aufgebauten Steckverbindern erfordert eine erhebliche Sorgfalt beim Zusammenfügen der Verbinderteile, insbesondere dann, wenn diese verschieden dimensionierte Kontaktelemente aufweisen. Besonders problematisch ist, dass das Zusammenfügen der Hochlastkontaktelemente eine gewisse Kraft erfordert. Kommt es dabei zu einem Verkanten der beiden Verbinderteile, so besteht die Gefahr, dass die wesentlich kleineren und mechanisch empfindlicheren Kleinlastkontaktelemente beschädigt werden.

Um solche Beschädigungen zu vermeiden, ist es erforderlich, dass die ersten und zweiten Verbinderteile mit ihren komplementären Gegensteckverbindern geradlinig in der vorgesehenen Steckrichtung zusammengeführt werden. Um dieses möglichst gut zu erreichen, werden sogenannte selbstausrichtende elektrische Verbinder eingesetzt.

Ein gattungsgemäßer selbstausrichtender elektrischer Verbinder ist aus der Druckschrift EP 2 816 674 A1 bekannt. Zur Ausrichtung auf einen Gegenverbinder weist der in diesem Dokument beschriebene Verbinder ein Montagemittel zum Befestigen einer Grundplatte an einer Struktur, sowie eine Anordnung auf, die die Grundplatte mit dem Montagemittel verbindet und die eine Vielzahl von gegeneinander verschiebbar verbundener Rahmen umfasst. Der Aufbau dieses Verbinders ist damit relativ aufwändig und komplex.

Es stellte sich die Aufgabe, einen selbstausrichtenden elektrischen Verbinder zu schaffen, dessen Mechanik zur Selbstausrichtung besonders einfach aufgebaut und kostengünstig herstellbar ist.

Diese Aufgabe wird erfindungsgemäß dadurch gelöst, dass das erste Verbinderteil an seiner Unterseite mehrere in einander gegenüberliegenden Richtungen seitlich abstehende Flächenelemente aufweist, die von am Trägerrahmen angeformten Federarmen in Richtung des Trägerrahmens mit einer Federkraft belastet werden, und dass das erste Verbinderteil zwischen den Flächenelementen eine Kugelpfanne aufweist, welche eine Kugel lagert, die an dem Trägerrahmen anliegt.

Das erste Verbinderteil ist somit nicht formschlüssig mit dem Trägerrahmen verbunden, sondern wird durch die Federkräfte mehrerer Federarme, die auf seitlich abstehende Flächenelemente wirken, am ersten Verbinderteil abgestützt. Zwischen den Flächenelementen ist das erste Verbinderteil auf einer Kugel gelagert, die durch eine Kugelpfanne am ersten Verbinderteil gehalten wird, und die auf einem ebenen Steg am Trägerrahmen abrollen kann.

Die Kugel ist dabei zentral zwischen den Federarmen angeordnet, so dass die grundsätzlich labile Lage des ersten Verbinderteils durch die auf die Flächenelemente wirkenden Federkräfte ausbalanciert wird.

Die auf den Flächenelementen aufliegenden Federarme ermöglichen hierbei seitliche Bewegungen der Flächenelemente, so dass das erste Verbinderteil Bewegungen parallel zur Ebene des Trägerrahmens ausführen kann. Dieses ermöglicht translatorische Bewegungen des ersten Verbinderteils relativ zum Trägerrahmen in zwei zueinander senkrechten Richtungen sowie auch eine Rotation um die Hochachse des ersten Verbinderteils. Die auf den Flächenelementen federnd aufliegenden Federarme lassen sich zudem einzeln in senkrechter Richtung auslenken und ermöglichen so in einem gewissen Maße Verkippungen um zwei weitere Körperachsen des ersten Verbinderteils.

Das erste Verbinderteil weist somit zwei translatorische und drei rotatorische Freiheitsgrade auf, durch die sich beim Anfügen des zweiten Verbinderteils das erste Verbinderteil zu diesem hin ausrichten kann.

Dies ermöglicht eine Vereinfachung des Steckvorgangs und schließt Beschädigungen an den Kontaktelementen weitgehend aus. Insbesondere ermöglicht es sogar gefahrloses "blindes" Zusammenfügen der Steckverbinderteile und unterstützt zudem das Zusammenstecken durch einen Roboter.

Besonders vorteilhaft ist die relativ einfach aufgebaute und damit kostengünstige Mechanik, welche das erste Verbinderteil beweglich am Trägerrahmen anordnet.

Dazu wird nachfolgend ein Ausführungsbeispiel der Erfindung anhand der Zeichnung dargestellt und näher erläutert. Es zeigen
- Figur 1: ein selbstausrichtendes Verbindersystem,
- Figur 2: ein erstes und ein zweites Verbinderteil,
- Figur 3: ein erstes Verbinderteil und einen Trägerrahmen,
- Figur 4: mögliche Bewegungen des Verbindersystems,
- Figur 5: skizzenhaft die Lagerung des ersten Verbinderteils am Trägerrahmen, und die
- Figuren 6 und 7: die Fixierung des ersten und des zweiten Verbinderteils aneinander.

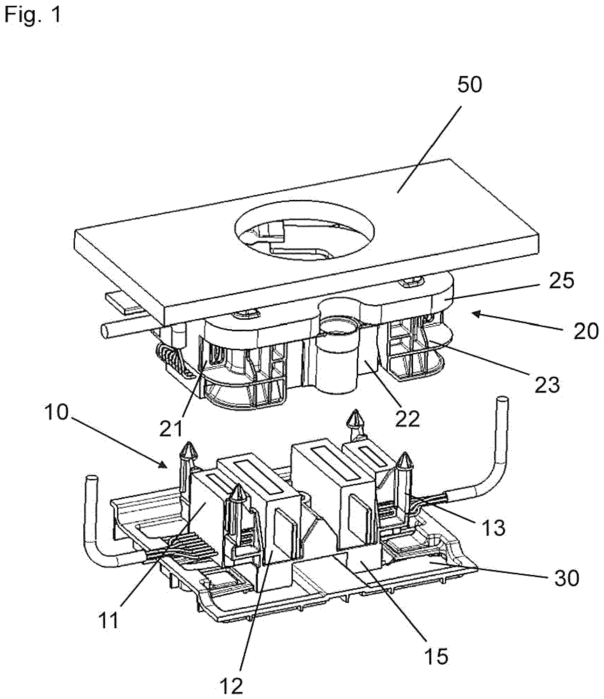

Die Figur 1 zeigt skizzenhaft ein Verbindersystem, welches ein erstes und ein zweites Verbinderteil 10, 20 aufweist. Ein solches Verbindersystem eignet sich beispielsweise zur Herstellung elektrischer Verbindungen zu einer Fahrzeugbatterie eines elektrisch angetriebenen Kraftfahrzeugs.

Das erste Verbinderteil 10 ist als ein stationäres Verbinderteil vorgesehen und kann für den genannten Anwendungsfall in einem Kraftfahrzeug montiert werden. Hierzu wird ein Trägerrahmen 30 eingesetzt, der fest mit der Karosserie eines Kraftfahrzeugs verbunden wird. Das hier unterhalb einer Abdeckung 50 dargestellte zweite Verbinderteil 20 ist mit einem hier nicht abgebildeten Ladekabel verbunden, welches in elektrischer Verbindung zu einer außerhalb des Kraftfahrzeugs angeordneten Ladevorrichtung steht.

Am ersten und am zweiten Verbinderteil 10, 20 sind an jeweils einem Kontaktträger 15, 25 mehrere elektrische Kontaktelemente 11, 12, 21, 22 angeordnet, die an den beiden Verbinderteilen 10, 20 jeweils komplementär zueinander als Stecker und Steckhülsen ausgeführt sind und durch das Zusammenfügen der Verbinderteile 10, 20 sowohl elektrisch als auch mechanisch miteinander verbunden werden können. Die elektrische Kontaktelemente 11, 12, 21, 22 sind in der Zeichnung vereinfacht durch nur jeweils ein Gehäuse dargestellt. Auf eine Darstellung von metallenen Steckern und Steckhülsen innerhalb dieser Gehäuse wurde verzichtet.

Neben einpolig ausgeführten Hochlastkontaktelementen 12, 22 zur Energieübertragung von der Ladevorrichtung auf das Kraftfahrzeug weist das Verbindersystem an jedem Verbinderteil 10, 20 beispielhaft jeweils zwei mehrpolige Kleinlaststeckverbinder 11, 21 auf, die etwa zur Übertragung von Steuersignalen oder -daten zwischen dem Kraftfahrzeug und der Ladevorrichtung geeignet sind.

Das händische oder durch Roboter ausgeführte Anfügen des zweiten Verbinderteils 20 an das erste Verbinderteil 10 erfordert eine gewisse Präzision, insbesondere um beim Steckvorgang die kleineren und damit mechanisch empfindlicheren Kleinlastkontaktelemente 11, 21 nicht zu beschädigen. Allerdings ist beim Anfügevorgang aufgrund der Größe und des komplexen Aufbaus der Verbinderteile 10, 20 eine genaue Ausrichtung nur schwer zu erreichen, so dass beim gegenseitigen Annähern im Allgemeinen eine leichte Verschiebung und/oder Verkippung der beiden Verbinderteile 10, 20 relativ zueinander kaum zu vermeiden ist.

Um dennoch ein leichtgängiges Verbinden zu ermöglichen und um Schäden an den Kontaktelementen 11, 12, 21, 22 durch ein nicht koaxiales Zusammenfügen zu verhindern, ist das erste Verbinderteil 10 an dem Trägerrahmen 30 schwimmend angeordnet, so dass sich das Verbinderteil 10 relativ zum Trägerrahmen 30 verschieben und verkippen und dadurch beim Anfügevorgang auf das zweite Verbinderteil 20 hin ausrichten kann.

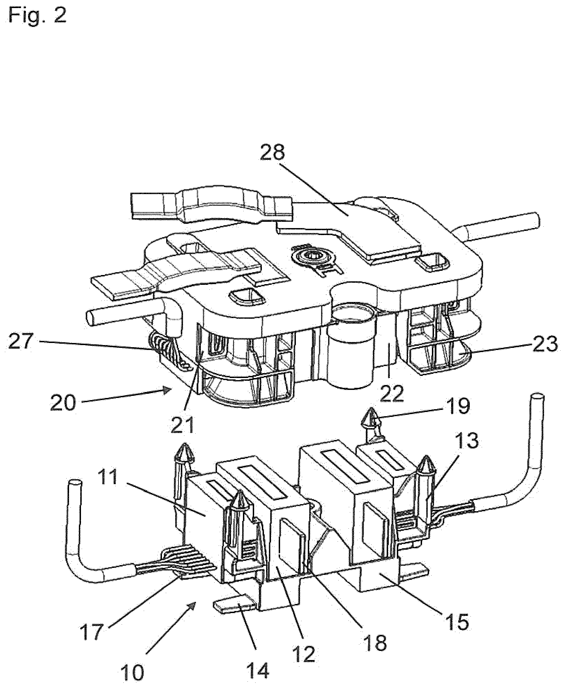

Die Figur 2 zeigt die beiden Verbinderteile 10, 20 als Einzelteile. Deutlich erkennbar sind hier die elektrischen Zuleitungen 17, 27 für die Kleinlastkontaktelemente 11, 21 am ersten und zweiten Verbinderteil 10, 20, sowie querschnittstarke Anschlüsse 18 und Zuleitungen 28 zu den Hochlastkontaktelementen 12, 22 am ersten und zweiten Verbinderteil 10, 20.

Am Kontaktträger 15 des ersten Verbinderteils 10 sind zwei seitlich abragende Flächenelemente 14 erkennbar, die sich in zueinander entgegengesetzte Richtungen erstrecken. Das erste Verbinderteil 10 weist parallel zu den dargestellten noch zwei weitere Flächenelemente auf, die in der Figur 2 jedoch von den Kleinlastkontaktelementen 11 verdeckt sind.

Das erste Verbinderteil 10 besitzt zudem mehrere Positionierstifte 13, die dazu vorgesehen sind, beim Zusammenfügen der beiden Verbinderteile 10, 20 in Positionierkammern 23 des zweiten Verbinderteils 20 einzugreifen, um eine Grobpositionierung der beiden Verbinderteile 10, 20 relativ zueinander herzustellen.

Die Positionierstifte 13 weisen vorzugsweise kegelförmige Endabschnitte 19 auf. Diese werden in Positionierkammern 23 am zweiten Verbinderteil 20 eingesetzt, die vorzugsweise jeweils als ein kegelförmiger Hohlraum ausgebildet sind. Die konischen Formen vereinfachen das Einsetzen der Positionierstifte 13 in die Positionierkammern 23 und bewirken, zusammen mit der nachfolgend beschriebenen schwimmenden Lagerung des ersten Verbinders 10 am Trägerrahmen 30, eine einfache Vorzentrierung der beiden Verbinderteile 10, 20 zueinander.

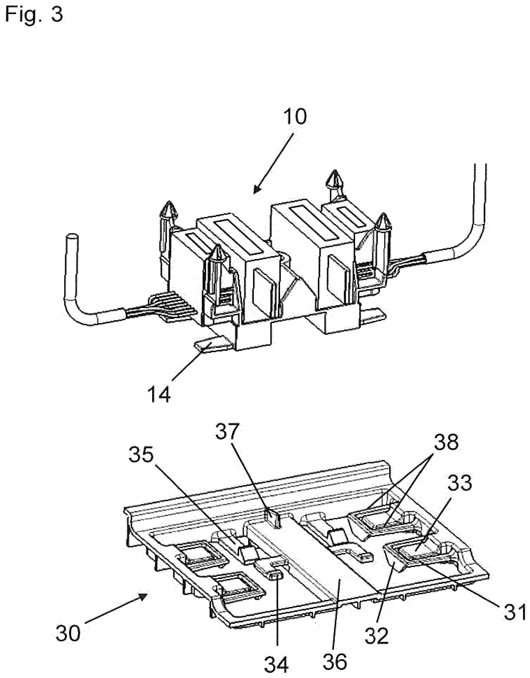

Noch vor dem Zusammenfügen des ersten und des zweiten Verbinderteils 10, 20 wird das erste Verbinderteil 10 schwimmend mit dem Trägerrahmen 30 verbunden. Wie aus der Figur 3 hervorgeht, weist der Trägerrahmen 30 mittig einen in Querrichtung verlaufenden zentralen Steg 36 auf, an dem seitlich zwei rechtwinklig abgewinkelte Auflegearme 34 angeformt sind. Die Auflegearme 34 erfüllen die Funktion, das erste Verbinderteil 10 federnd abzustützen. An seiner hinteren Längsseite weist der Trägerrahmen 30 zwei angeformte Rasthaken 35 auf.

An den beiden Schmalseiten des Trägerrahmens 30 befinden sich jeweils zwei elastische Federarme 31, die jeweils aus zwei stiftartigen Stegen 38 gebildet sind, deren Stirnflächen durch einen flächigen Abschnitt verbunden sind, der nachfolgend als Haltenase 32 bezeichnet wird. Die relativ dünnen stiftartigen Stege 38 sind einstückig mit den Schmalseiten des Trägerrahmens 30 verbunden.

Jeweils zwischen den beiden Stegen 38 jedes Federarms 31 sind am Trägerrahmen 30 Begrenzungsstreben 33 angeformt, die aufgrund ihrer massiveren Ausgestaltung relativ starr mit dem Trägerrahmen 30 verbunden sind.

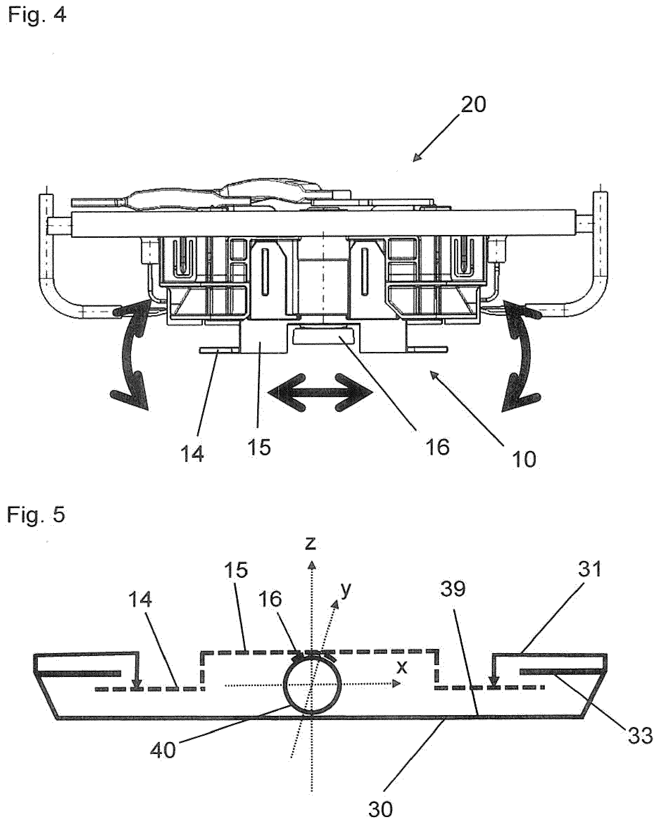

Wie die Figur 4 zeigt, befindet sich am ersten Verbinderteil 10 zwischen den Flächenelementen 14 eine Anformung, die als eine sich zur Unterseite hin öffnende Kugelpfanne 16 ausgebildet ist.

Zum Verbinden des ersten Verbinderteils 10 mit dem Trägerrahmen 30 wird in diese Kugelpfanne 16 eine Kugel 40 eingesetzt und zudem auf den Steg 36 (Figur 3) des Trägerrahmens 30 aufgelegt. Danach werden die Flächenelemente 14 des ersten Verbinderteils 10 jeweils unter die Begrenzungsstreben 33 und unter die federnden Haltenasen 32 geschoben, bis die Rasthaken 35 an nicht dargestellten Rastaufnahmen am ersten Verbinderteil 10 lose einrasten. Die Rasthaken 35 haben hierbei lediglich die Funktion, das erste Verbinderteil 10 gegen ein Herausfallen entlang der Querrichtung des Trägerrahmens 30 zu sichern und schränken darüber hinaus seitliche Relativbewegungen zwischen dem ersten Verbinderteil 10 und dem Trägerrahmen 30 nicht ein.

Eine schwimmende Lagerung des ersten Verbinders 10 am Trägerrahmen 30 wird nun dadurch erreicht, dass die an der Unterseite des ersten Verbinderteils 10 angeformten Flächenelemente 14 von den am Trägerrahmen 30 angeformten Federarmen 31 in Richtung des Trägerrahmens 30 mit einer Federkraft belastet werden, und dass sich das erste Verbinderteil 10 zudem auf der Kugel 40 gelagert am Trägerrahmen 30 abstützt.

Die Flächenelemente 14 befinden sich so unterhalb der federnden Haltenasen 32, welche mit ihrer Federkraft die Flächenelemente 14 in Richtung der Grundfläche 39 niederhalten und aufgrund der Lagerung auf der Kugel 40 ausbalancieren. Dieses wird durch die skizzenhafte Darstellung der Figur 5 verdeutlicht.

Die zentral angeordnete Kugel 40 stützt das beispielhaft an einem Fahrzeug angeordnete erste Verbinderteil 10 in der Anfügerichtung des zweiten Verbinderteils 20 an dem Trägerrahmen 30 ab und ermöglicht Kipp- und Verschiebebewegungen des ersten Verbinderteils 10 um den Auflagepunkt der Kugel 40 an dem Trägerrahmen 30. Die am ersten Verbinderteil 10 um die Kugel 40 herum angeordnete Flächenelemente 14 werden durch die am Trägerrahmen 30 angeformten Federarme 31 in Richtung der Trägerrahmenoberfläche gedrückt. Die Federarme 31 fixieren so das erste Verbinderteil 10 schwimmend am Trägerrahmen 30, ermöglichen dabei aber Dreh- und Verschiebebewegung.

Die Figur 4 deutet durch eingezeichnete Pfeile nur einige Möglichkeiten des Verschiebens und Verkippens des ersten Verbinderteils 10 relativ zum Trägerrahmen 30 an. Zur genaueren Beschreibung der Bewegungsmöglichkeiten ist in der Figur 5 ein rechtwinkliges Koordinatensystem mit den Koordinatenachsen x, y und z eingezeichnet. Der Ursprung des Koordinatensystems wurde willkürlich in den Mittelpunkt der Kugel 40 gelegt. Die Koordinatenachse x verläuft parallel zur Grundfläche 39 des Trägerrahmens 30 in der Zeichenebene, die z-Achse liegt als Hochachse ebenfalls in der Zeichenebene, währende die Koordinatenachse y (in der Zeichnung nur unvollkommen dargestellt) senkrecht zur Zeichenebene ausgerichtet ist.

Die Lagerung des ersten Verbinderteil 10 an der Kugel 40 und den Federarmen 31 des Trägerahmens ermöglicht Translationsbewegungen des ersten Verbinderteils 10 in x- und y-Richtung, sowie Kippbewegungen um die x- und y-Achse sowie auch Drehbewegungen um die z-Achse. Die Weite der Kippbewegungen wird durch die als Anschläge wirkenden Begrenzungsstreben 33 eingeschränkt. Zur Begrenzung der Weite von Drehbewegungen um die z-Achse kann am Steg 36 des Trägerrahmens 30 ein senkrecht abstehendes Anschlagelement 37 angeformt sein (Figur 3). Die Weite von Translationsbewegungen des ersten Verbinderteils 10 in der x- und y-Richtung werden durch die Form des Trägerrahmens 30 auf das erforderliche Maß begrenzt.

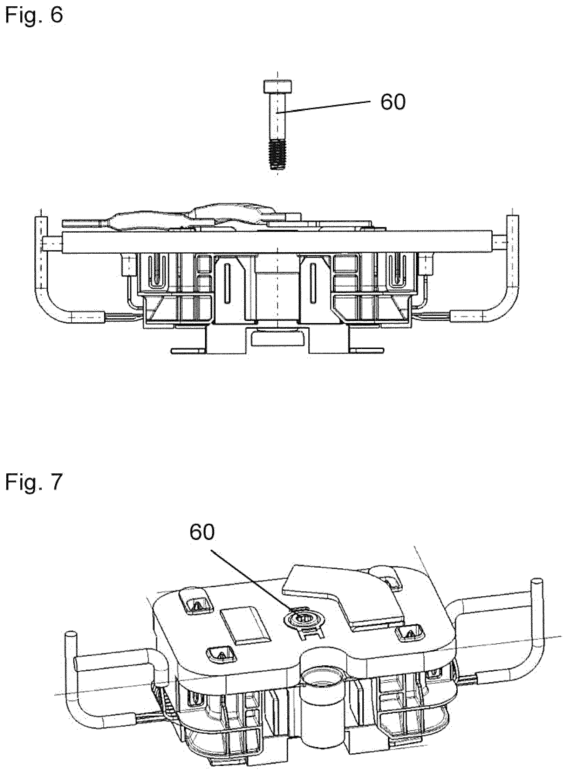

Durch die umfassenden Bewegungsmöglichkeiten zwischen dem ersten und zweiten Verbinderteil 10, 20 und der Zentrierung durch die in die Positionierkammern 23 eingreifenden Positionierstifte 13 werden anfängliche Fehlstellungen zwischen den beiden Verbinderteile 10, 20 rasch ausgeglichen, und so einfaches Zusammenfügen der Kontaktelemente 11,12, 21, 22 der Verbinderteile 10, 20 sichergestellt werden. Nach Abschluss des Fügevorgangs kann die Verbindung der beiden Verbinderteile 10, 20 auf einfache Weise mit einer einzigen zentral eingesetzten Schraube 60 gesichert werden (Figuren 6 und 7).

### Bezugszeichen

- 10: erstes Verbinderteil
- 11: Kleinlastkontaktelement
- 12: Hochlastkontaktelemente
- 13: Positionierstifte
- 14: Flächenelemente
- 15: Kontaktträger
- 16: Kugelpfanne
- 17: Zuleitungen
- 18: Anschlüsse
- 19: kegelförmige Endabschnitte
- 20: zweites Verbinderteil
- 21: Kleinlastkontaktelement
- 22: Hochlastkontaktelemente
- 23: Positionierkammern
- 25: Kontaktträger
- 27: Zuleitungen
- 28: Zuleitungen
- 30: Trägerrahmen
- 31: Federarme
- 32: Haltenase
- 33: Begrenzungsstreben
- 34: Auflegearme
- 35: Rasthaken
- 36: Steg
- 37: Anschlagselement
- 38: stiftförmige Stege
- 39: Grundfläche
- 40: Kugel
- 50: Abdeckung
- 60: Schraube
- x, y, z: Koordinatenachsen

## Patentansprüche

1. Selbstausrichtendes elektrisches Verbindersystem zur Daten- und/oder Energieübertragung,
mit einem ersten Verbinderteil (10), welches mehrere Kleinlastkontaktelemente (11) und/oder Hochlastkontaktelemente (12) aufweist,
mit einem an das erste Verbinderteil (10) anfügbaren zweiten Verbinderteil (20), welches zu den Kleinlastkontaktelementen (11) und/oder Hochlastkontaktelementen (12) des ersten Verbinderteils (10) komplementäre Kleinlastkontaktelemente (21) und/oder Hochlastkontaktelemente (22) aufweist,
wobei das erste Verbinderteil (10) mehrere Positionierstifte (13) aufweist, die dazu ausgelegt sind, in Positionierkammern (23) des zweiten Verbinderteils (20) einzugreifen, um eine Grobpositionierung der beiden Verbinderteile (10, 20) relativ zueinander zu erreichen,
und mit einem ebenen Trägerrahmen (30), an dem das erste Verbinderteil (10) mit drei rotatorischen und mindestens zwei translatorischen Freiheitsgraden schwimmend angeordnet ist,
**dadurch gekennzeichnet,**
**dass** das erste Verbinderteil (10) an seiner Unterseite mehrere in einander gegenüberliegenden Richtungen seitlich abstehende Flächenelemente (14) aufweist, die von am Trägerrahmen (30) angeformten Federarmen (31) in Richtung des Trägerrahmens (30) mit einer Federkraft belastet werden, und
**dass** das erste Verbinderteil (10) zwischen den Flächenelementen (14) eine Kugelpfanne (16) aufweist, welche eine Kugel (40) lagert, die an dem Trägerrahmen (30) anliegt.

2. Selbstausrichendes elektrisches Verbindersystem nach Anspruch 1, **dadurch gekennzeichnet, dass** die Positionierstifte (13) kegelförmige Endabschnitte (19) aufweisen.

3. Selbstausrichendes elektrisches Verbindersystem nach Anspruch 1, **dadurch gekennzeichnet, dass** die Positionierkammern (23) kegelförmig ausgebildet sind.

4. Selbstausrichendes elektrisches Verbindersystem nach Anspruch 1, **dadurch gekennzeichnet, dass** am Trägerrahmen (30) Begrenzungsstreben (33) angeordnet sind.

5. Selbstausrichendes elektrisches Verbindersystem nach Anspruch 1, **dadurch gekennzeichnet, dass** die Fixierung des ersten Verbinderteils (10) am zweiten Verbinderteil (20) durch einer Schraube (60) erfolgt.

## Claims

1. Self-aligning electrical connector system for data and/or power transmission having a first connector part (10) which has a plurality of low-load contact elements (11) and/or high-load contact elements (12),
with a second connector part (20) which can be attached to the first connector part (10) and which has low-load contact elements (21) and/or high-load contact elements (22) complementary to the low-load contact elements (11) and/or high-load contact elements (12) of the first connector part (10),
the first connector part (10) having a plurality of positioning pins (13) which are designed to engage in positioning chambers (23) of the second connector part (20) in order to achieve rough positioning of the two connector parts (10, 20) relative to one another,
and with a flat support frame (30) on which the first connector part (10) is floatingly arranged with three rotational and at least two translational degrees of freedom,
**characterized in that**,
the first connector part (10) has on its bottom a plurality of surface elements (14) projecting laterally in opposite directions, which are loaded with a spring force in the direction of the support frame (30) by spring arms (31) formed on the support frame (30),
and **in that** the first connector part (10) has a ball socket (16) between the surface elements (14), which ball socket supports a ball (40) that rests against the support frame (30).

2. Self-aligning electrical connector system according to claim 1, **characterized in that** the positioning pins (13) have conical end sections (19).

3. Self-aligning electrical connector system according to claim 1, **characterized in that** the positioning chambers (23) are conical in shape.

4. Self-aligning electrical connector system according to claim 1, **characterized in that** limiting struts (33) are arranged on the carrier frame (30).

5. Self-aligning electrical connector system according to claim 1, **characterized in that** the first connector part (10) is fixed to the second connector part (20) by means of a screw (60).

## Revendications

1. Ensemble connecteur électrique à alignement automatique pour la transmission de données et/ou d'énergie, comprenant une première partie de connecteur (10) qui comporte plusieurs éléments de contact à petite charge (11) et/ou éléments de contact à charge élevée (12),
avec une deuxième partie de connecteur (20) pouvant être ajoutée à la première partie de connecteur (10), qui présente des éléments de contact pour petites charges (11) et/ou des éléments de contact pour charges élevées (12) complémentaires aux éléments de contact pour petites charges (21) et/ou aux éléments de contact pour charges élevées (22) de la première partie de connecteur (10),
dans lequel la première partie de connecteur (10) comprend une pluralité de broches de positionnement (13) adaptées pour s'engager dans des chambres de positionnement (23) de la seconde partie de connecteur (20) afin d'obtenir un positionnement approximatif des deux parties de connecteur (10, 20) l'une par rapport à l'autre,
et avec un cadre de support plan (30) sur lequel la première partie de connecteur (10) est disposée de manière flottante avec trois degrés de liberté en rotation et au moins deux degrés de liberté en translation,
**caractérisé en ce que**,
la première partie de connecteur (10) présente sur sa face inférieure plusieurs éléments de surface (14) faisant saillie latéralement dans des directions opposées les unes aux autres, qui sont chargés par des bras élastiques (31) formés sur le cadre de support (30) avec une force élastique en direction du cadre de support (30), et
**en ce que** la première partie de connecteur (10) présente, entre les éléments de surface (14), un coussinet sphérique (16) qui supporte une bille (40) qui s'appuie contre le cadre de support (30).

2. Ensemble connecteur électrique à alignement automatique selon la revendication 1, **caractérisé en ce que** les broches de positionnement (13) ont des parties d'extrémité coniques (19).

3. Ensemble connecteur électrique à alignement automatique selon la revendication 1, **caractérisé en ce que** les chambres de positionnement (23) sont de forme conique.

4. Ensemble connecteur électrique à alignement automatique selon la revendication 1, **caractérisé en ce que** des entretoises de limitation (33) sont disposées sur le cadre de support (30).

5. Ensemble connecteur électrique à alignement automatique selon la revendication 1, **caractérisé en ce que** la fixation de la première partie de connecteur (10) à la deuxième partie de connecteur (20) est effectuée par une vis (60).
